(19) Europäisches Patentamt / European Patent Office / Office européen des brevets

(11) **EP 2 834 060 B1**

(12) **FASCICULE DE BREVET EUROPEEN**

(45) Date de publication et mention
de la délivrance du brevet:
**24.07.2019 Bulletin 2019/30**

(21) Numéro de dépôt: **13719942.8**

(22) Date de dépôt: **28.03.2013**

(51) Int Cl.:
*B29C 70/08* (2006.01)     *B29C 70/88* (2006.01)
*B29B 11/16* (2006.01)     *B29C 70/12* (2006.01)
*B29C 70/20* (2006.01)     *B29K 307/04* (2006.01)

(86) Numéro de dépôt international:
**PCT/FR2013/050690**

(87) Numéro de publication internationale:
**WO 2013/150223 (10.10.2013 Gazette 2013/41)**

(54) **MATERIAU AUX PROPRIETES DE CONDUCTIVITE AMELIOREES POUR LA REALISATION DE PIECES COMPOSITES EN ASSOCIATION AVEC UNE RESINE**

MATERIAL MIT VERBESSERTEN LEITFÄHIGKEITSEIGENSCHAFTEN ZUR HERSTELLUNG VON VERBUNDBAUTEILEN IN KOMBINATION MIT EINEM HARZ

MATERIAL WITH IMPROVED CONDUCTIVITY PROPERTIES FOR THE PRODUCTION OF COMPOSITE PARTS IN COMBINATION WITH A RESIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.04.2012 FR 1252979**

(43) Date de publication de la demande:
**11.02.2015 Bulletin 2015/07**

(73) Titulaire: **Hexcel Reinforcements**
**01120 Dagneux (FR)**

(72) Inventeurs:
• **BERAUD, Jean-Marc**
**F-38140 Rives (FR)**

• **VIARD, Andréa**
**38460 Villemoirieu (FR)**

(74) Mandataire: **Sarlin, Laure V.**
**Cabinet Beau de Loménie**
**51, avenue Jean-Jaurès**
**BP 7073**
**69301 Lyon Cedex 07 (FR)**

(56) Documents cités:
**EP-A2- 0 465 399      WO-A1-93/15904**
**WO-A1-99/21697      WO-A1-2010/037991**
**FR-A1- 2 924 049      FR-A1- 2 937 583**
**US-A1- 2003 008 125**

**Description**

La présente invention concerne le domaine technique des matériaux de renfort, dits « secs », adaptés à la constitution de pièces composites en association avec une résine thermodurcissable ou thermoplastique qui va être diffusée au sein de tels matériaux pour la constitution de la pièce composite finale. Plus précisément, l'invention concerne un nouveau matériau intermédiaire à base de nappes unidirectionnelles de fibres de carbone, combinant des propriétés en termes de résistance mécanique et de conductivité électrique satisfaisantes, adapté pour la conception de pièces composites par injection ou infusion ultérieure de résine thermodurcissable, thermoplastique, ou d'un mélange de telles résines, ainsi qu'un procédé de fabrication de pièces composites à partir d'un tel matériau, et les pièces composites ainsi obtenues.

La fabrication de pièces ou d'articles composites, c'est-à-dire comprenant, d'une part, un ou plusieurs renforts ou nappes fibreuses et, d'autre part, une matrice principalement de type thermodurcissable (« résine ») et pouvant inclure des thermoplastiques, peut, par exemple, être réalisée par un procédé dit "direct" ou "LCM" (de l'anglais « Liquid Composite Moulding »). Un procédé direct est défini par le fait qu'un ou plusieurs renforts fibreux sont mis en oeuvre à l'état "sec" (c'est-à-dire sans la matrice finale), la résine ou matrice, étant mise en oeuvre séparément, par exemple par injection dans le moule contenant les renforts fibreux (procédé "RTM", de l'anglais Resin Transfer Moulding), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renfort fibreux, appliquées de manière successive sur la forme.

Pour les procédés RTM, LRI ou RFI, il faut en général tout d'abord fabriquer une préforme fibreuse de la forme de l'article fini désiré, puis imprégner cette préforme d'une résine. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

Les pièces composites utilisées dans l'industrie automobile, aéronautique ou navale, sont en particulier soumises à des exigences très strictes, notamment en termes de propriétés mécaniques. Pour économiser en carburant, l'industrie aéronautique a remplacé de nombreux matériaux métalliques par des matériaux composites qui sont plus légers. De plus, de nombreuses commandes de vol hydrauliques sont remplacées par des commandes électroniques toujours dans un souci de gain de poids.

La résine qui est ultérieurement associée, notamment par injection ou infusion, aux nappes unidirectionnelles de renfort, lors de la réalisation de la pièce, peut être une résine thermodurcissable, par exemple du type époxy. Pour permettre un écoulement correct au travers d'une préforme constituée d'un empilement de différentes couches de fibres de carbone, cette résine est, le plus souvent, très fluide, par exemple d'une viscosité de l'ordre de 50 à 200mPa.s. à température d'infusion/injection. L'inconvénient majeur de ce type de résine est leur fragilité, après polymérisation/réticulation, ce qui entraîne une faible résistance à l'impact des pièces composites réalisées.

Afin de résoudre ce problème, il a été proposé dans les documents de l'art antérieur d'associer les couches unidirectionnelles de fibres de carbone à des couches intermédiaires à base de résine, et notamment à un voile de fibres thermoplastiques. De telles solutions sont notamment décrites dans les demandes de brevet ou les brevets EP 1125728, US 6828016, WO 00/58083, WO 2007/015706, WO 2006/121961 et US 6,503,856. Dans la demande de brevet FR 2924049, cette résine est associée par co-tissage ou co-tressage à des couches de renforcement en fibres sèches tissées ou tressées ; les couches de renforcement étant disposées de part et d'autre de la couche structurale faite de fibres unidirectionnelles. L'ajout de cette couche de résine intermédiaire tel qu'un voile permet d'améliorer les propriétés mécaniques au test de compression après impact (CAI), test utilisé de manière courante pour caractériser la résistance des structures à l'impact.

La demanderesse a également proposé dans les demandes de brevet antérieures WO 2010/046609 et WO 2010/061114, des matériaux intermédiaires particuliers comportant une nappe de fibres unidirectionnelles, en particulier de carbone, associée par collage, sur chacune de ses faces à un voile de fibres thermoplastiques (également nommé non-tissé), ainsi que leur procédé d'élaboration.

De tels matériaux composites sont constitués de couches de carbone et de couches de matière thermodurcissable ou thermoplastique. La fibre de carbone est conductrice d'électricité à la différence des matières thermodurcissables ou thermoplastiques. L'empilement de ces deux matériaux est donc un empilement de matériaux conducteurs et de matériaux isolants. La conductivité électrique transverse est donc quasi nulle du fait de la présence de couches de résine.

Or, pour dissiper l'énergie apportée par le passage de la foudre sur le fuselage ou la voilure (ailes) et également assurer la fonction de retour de courant, la conductivité électrique transverse des pièces composites utilisées en aéronautique doit être importante. Les réserves de carburant étant situées dans les ailes des avions, il est primordial d'arriver à dissiper l'énergie électrique et donc d'avoir une bonne conductivité selon l'axe orthogonal à la surface de la pièce, axe nommé z. En structure aéronautique, la conductivité électrique était apportée, jusqu'à aujourd'hui, par le matériau lui-même, qui était majoritairement à base d'aluminium. Les nouveaux modèles d'avions intégrant de plus en plus de matériaux composites, majoritairement à base de carbone, il est devenu indispensable d'apporter une conductivité supplémentaire pour assurer les fonctions de retour de courant et de résistance à la foudre. Cette conductivité est apportée actuellement sur des pièces composites à base de fibres de carbone par l'utilisation locale de rubans ou tresses métalliques liant les pièces entre elles. Une telle solution augmente considérablement la masse et le coût de la solution composite, et n'est donc pas satisfaisante.

Dans le but de fournir des matériaux présentant une bonne conductivité électrique, la demande de brevet US 2003/0008125 prévoit d'associer une nappe de fibres unidirectionnelles de carbone à un non-tissé de carbone et d'assurer leur liaison grâce à une couche thermoplastique. La couche thermoplastique sert à imprégner les couches de carbone. Le matériau décrit, du fait notamment de l'utilisation d'une couche thermoplastique non poreuse et de l'absence de précision quant à la quantité de résine thermoplastique présente n'est pas adapté pour être utilisé dans des procédés directs tels que précédemment décrits.

La demande de brevet WO 99/21697 prévoit également d'associer des nappes unidirectionnelles de carbone à des non tissés de carbone, mais uniquement dans le but de proposer des matériaux adaptés aux procédés directs. Pour cela, l'association entre les différentes couches est assurée par une grille réalisée en une matière polymérisable, c'est-à-dire thermodurcissable, de manière à limiter la quantité de matière polymérisable présente à 6 à 12 % en masse de la masse totale du matériau.

Dans ce contexte, la présente invention concerne un matériau adapté à la réalisation de pièces composites par un procédé dans lequel une matrice thermoplastique ou thermodurcissable externe est diffusée au sein dudit matériau, comprenant au moins une nappe de fibres de carbone unidirectionnelles associée, sur au moins une de ses faces, à au moins un composant conducteur. Ledit composant conducteur est associé ou intégré à une couche perméable en une matière thermoplastique ou en un mélange de matières thermoplastique et thermodurcissable, ladite couche perméable se présentant sous la forme d'un tissu, d'une poudre, d'un film poreux, d'un tricot, ou, de préférence, d'un non-tissé. Une telle couche permet à la fois de laisser passer la résine qui va être injectée ou infusée lors de la réalisation ultérieure d'une pièce composite.

Dans le cadre de l'invention, de préférence, chaque nappe de fibres de carbone unidirectionnelles présente au sein du matériau est liée à au moins un composant conducteur qui est associé ou intégré à une couche perméable en une matière thermoplastique ou en un mélange de matières thermoplastique et thermodurcissable, ladite couche perméable se présentant sous la forme d'un tissu, d'une poudre, d'un film poreux, d'un tricot, ou, de préférence, d'un non-tissé.

Un tel matériau étant destiné à la réalisation de pièces composites par procédé direct, le matériau selon l'invention ne contient pas plus de 10% de matière thermoplastique ou de matières thermoplastique et thermodurcissable, et en particulier la quantité de matière thermoplastique ou d'un mélange de matières thermoplastique et thermodurcissable représente de 0,5 à 10% de la masse totale du matériau.

L'invention a également pour objet un procédé de fabrication d'une pièce composite caractérisé en ce qu'il comporte les étapes suivantes :

a) disposer d'au moins un matériau selon l'invention,
b) diffuser, par infusion ou injection, une résine thermodurcissable, une résine thermoplastique ou un mélange de telles résines, au sein du ou des matériaux,
c) consolider la pièce souhaitée par une étape de polymérisation/réticulation suivant un cycle défini en température et sous pression, suivi d'un refroidissement.

Les matériaux, procédés et pièces composites conformes à l'invention sont décrits de manière détaillée dans la description qui va suivre, en référence aux Figures annexées.

La **Figure 1** est une vue schématique en coupe d'un exemple de matériau conforme à l'invention.
Les **Figures 2A** et **2B** sont respectivement des vues schématiques de dessus et en coupe selon le plan **P1** d'un autre exemple de matériau conforme à l'invention.
Les **Figures 3A, 3B** et **3C** sont respectivement des vues schématiques de dessus et en coupe selon le plan **P2** d'un exemple de matériau conforme à l'invention utilisant des fils conducteurs.
Les **Figures 4A** et **4B** sont respectivement des vues schématiques de dessus et en coupe selon le plan **P3** d'un autre exemple de matériau conforme à l'invention utilisant des fils conducteurs.
Les **Figures 4C** à **4E** sont des Figures analogues à la **Figure 4B** montrant d'autres positionnements des fils conducteurs.

L'invention prévoit d'associer une nappe de fibres unidirectionnelles de carbone à au moins un composant conducteur qui assure une conduction électrique. Ce composant conducteur peut notamment se présenter sous la forme de particules, de fibres courtes ou de fils. Le composant conducteur peut être en un matériau conducteur ou seule sa surface peut être en un matériau conducteur. Par fibres courtes, on entend des fibres de moins de 1 millimètre de longueur. Le matériau conducteur est, par exemple, constitué de carbone, de graphite, de nickel, d'or, de platine, de palladium, d'argent, de cuivre ou de cobalt. Dans le cadre de l'invention, les particules ou les fibres conductrices peuvent être constituées d'une large variété de matériaux, tels que du verre métallisé, du carbone, du carbone métallisé, du graphite, des polymères métallisés, des fibres métalliques et des mélanges de ceux-ci. On préférera les fibres de carbone, notamment de 20 à 200 micromètres de long.

La ou les nappes de fibres de carbone unidirectionnelles et le ou les composants conducteurs présents dans le matériau peuvent être liés par couture, par tricotage, par un adhésif ou par thermoliage. Dans les matériaux selon l'invention, l'association entre la nappe unidirectionnelle et les composants conducteurs peut être réalisée de manière discontinue, par exemple uniquement en certains points ou zones, ou peut être réalisée selon une liaison qualifiée de continue, qui s'étend sur la totalité de la surface de la nappe ou des composants conducteurs. L'association entre nappe unidirectionnelle et composants conducteurs peut se faire par l'intermédiaire d'une couche adhésive, par exemple choisie parmi les adhésifs époxydes, adhésifs polyuréthane, les colles thermodurcissables, les adhésifs à base de monomère polymérisables, les adhésifs acryliques structuraux ou acryliques modifiés, les adhésifs hot-melt.

Dans le cadre de l'invention, le composant conducteur est associé ou intégré à une matière thermoplastique ou à un mélange de matières thermoplastique et thermodurcissable. Dans le cas de l'utilisation d'un mélange de matières thermoplastique et thermodurcissable, la matière thermodurcissable représentera, de préférence, moins de 50% de la masse totale du mélange, et par exemple moins de 20%. De manière préférée, la liaison entre nappe unidirectionnelle et composants conducteurs se fera par l'intermédiaire de cette matière thermoplastique. Le rapport massique composant conducteur/matière thermoplastique ou composant conducteur/matières thermoplastique et thermodurcissable est, par exemple, de 0,3 à 50 %, de préférence de 0,5 à 5 %. De tels rapports plus faibles permettent de limiter l'apport de matériaux ne travaillant pas mécaniquement et qui ont tendance à alourdir la structure. Un taux de composant conducteur plus faible sera donc recherché pour une conductivité donnée.

La matière thermoplastique ou le mélange de matières thermoplastique et thermodurcissable forme une couche perméable. Dans le cadre de l'invention, on préférera utiliser une couche perméable constituée en une matière thermoplastique uniquement, voire en un mélange de matières thermoplastique et thermodurcissable, plutôt qu'une couche perméable en une matière thermodurcissable. En effet, l'utilisation de matériau thermodurcissable non polymérisé rend l'utilisation des matériaux périssables et nécessite un stockage à des températures de l'ordre -18°C pour prolonger leur durée de vie, inconvénient que ne présente pas les matières thermoplastiques.

Cette couche est qualifiée de perméable car elle doit laisser passer la résine thermodurcissable ou thermoplastique qui va être diffusée lors de la réalisation de la pièce composite et qui doit pénétrer dans tout le volume de la pièce. Chaque ensemble couche perméable + composant(s) conducteur(s) aura, de préférence, un facteur d'ouverture se situant dans la gamme allant de 30 à 99 %, préférentiellement dans la gamme allant de 40 à 70 %. Le facteur d'ouverture peut être défini comme le rapport entre la surface non occupée par la matière et la surface totale observée, dont l'observation peut être faite par le dessus du matériau avec un éclairage par le dessous de ce dernier. Il peut, par exemple, être mesuré selon la méthode décrite dans la demande WO2011/086266 et sera exprimé en %. Par ensemble couche perméable + composant(s) conducteur(s), on entend la partie du matériau correspondant au(x) composant(s) conducteur(s) associé(s) ou intégré(s) à la matière thermoplastique ou au mélange de matières thermoplastique et thermodurcissable situé sur une face d'une nappe unidirectionnelle ou entre deux nappes unidirectionnelles.

Ladite couche perméable se présente sous la forme d'un tissu, d'une poudre, d'un film poreux, ou, de préférence, d'un non-tissé. De manière avantageuse, chaque ensemble couche perméable + composant(s) conducteur(s) a une masse surfacique dans la gamme allant de 0,5 à 30 g/m$^2$, de préférence dans la gamme allant de 1 à 15 g/m$^2$. Une telle masse surfacique permet de réduire la masse de matière n'ayant pas une fonction de renfort, qui ne travaille pas mécaniquement de façon directe. Une telle masse assez faible est également associée à une épaisseur assez faible, ce qui permet d'optimiser l'épaisseur du matériau final.

Chaque ensemble couche perméable + composant(s) conducteur(s) a, par exemple, une épaisseur de 5 à 30 microns, de préférence de 5 à 20 microns. L'épaisseur totale du matériau selon l'invention dépend de l'épaisseur du renfort, donc directement de son architecture textile, qui dans le cas de l'invention est une nappe de fibres unidirectionnelles, mais également de l'épaisseur de la couche perméable. En sélectionnant les composants conducteurs et les couches perméables de manière à avoir une telle épaisseur, l'homme du métier pourra optimiser le taux volumique de fibres qui sera obtenu par les procédés directs utilisant l'infusion ou l'injection de résine. En effet, particulièrement lorsque le procédé d'infusion est utilisé, il est important d'obtenir une Taux Volumique de Fibres dans la gamme de 55% à 70%, ce qui pourra notamment être obtenu avec de telles épaisseurs pour les couches perméables.

Dans le cadre de la présente invention, les épaisseurs et les grammages sont, par exemple, déterminés selon les techniques décrites dans la demande de brevet WO 2010/046609.

De plus, il est important, lors de l'empilement de plusieurs couches de matériaux selon l'invention, d'obtenir une épaisseur de préforme proche de l'épaisseur finale de la pièce finie injectée ou infusée de résine. Pour ce faire, l'épaisseur correspondant aux composants conducteurs et à la matière thermoplastique ou au mélange de matières thermoplastique et thermodurcissable devra également être la plus faible possible.

De manière préférée, la ou les nappes de fibres de carbone unidirectionnelles et la ou les composants conducteurs présents dans le matériau sont liées grâce à la matière thermoplastique ou au mélange de matières thermoplastique et thermodurcissable par thermoliage.

Les dispositions suivantes des composants conducteurs et de la matière thermoplastique ou du mélange de matières thermoplastique et thermodurcissable, par rapport aux nappes unidirectionnelles sont, notamment, possibles :

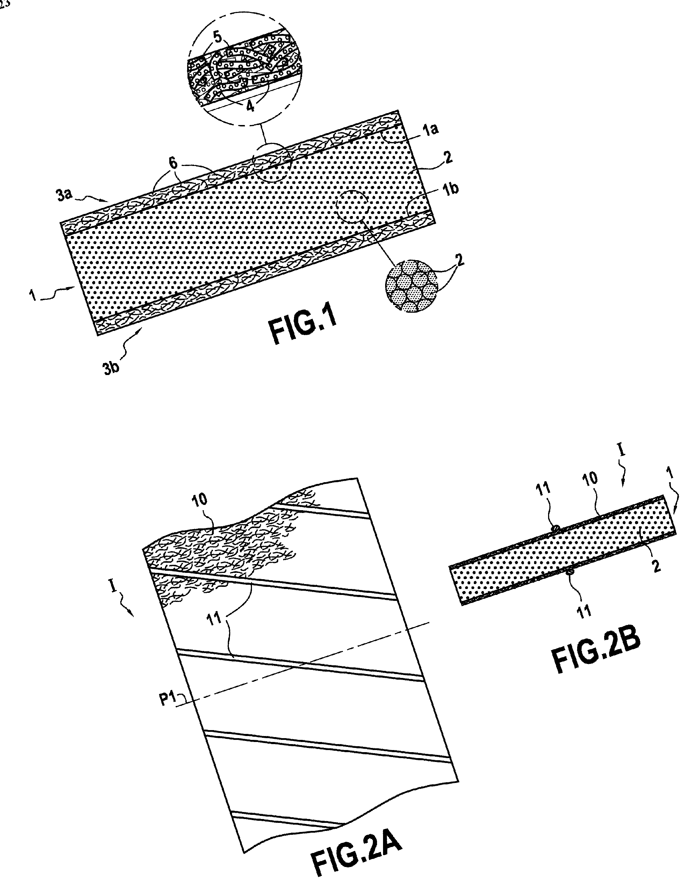

- Selon un premier mode de mise en oeuvre, le composant conducteur peut se présenter sous la forme de particules ou fibres conductrices réparties dans une matrice thermoplastique, ou dans un mélange de matières thermoplastique et thermodurcissable, formant un tissu, un tricot, ou, de préférence, un non-tissé. De telles particules conductrices peuvent se présenter sous la forme de nanosphères, nanotubes, ... Il est possible, notamment, d'utiliser de la poudre de carbone ou des fibres de carbone. Le rapport massique particules conductrices / polymère thermoplastique ou particules conductrices / mélange de matières thermoplastique et thermodurcissable sera, notamment, de 0,3 à 5% et le rapport massique fibres conductrices / polymère thermoplastique ou fibres conductrices / mélange de matières thermoplastique et thermodurcissable sera, notamment, de 1% à 50%. Ces différences de pourcentages s'expliquent par les contraintes en termes de viscosité du matériau (matière thermoplastique ou matières thermoplastique et thermodurcissable + composants conducteurs) utilisé pour réaliser les fibres constitutives du tissu ou non-tissé. La **Figure 1** illustre un tel mode de réalisation dans lequel une nappe **1** de fibres unidirectionnelles **2** de carbone est associée sur chacune de ses grandes faces **1a** et **1b** à un non-tissé **3a** et **3b** de fibres **6** constituées d'une matrice thermoplastique **4** dans laquelle des nanoparticules **5** de carbone sont réparties.

- Selon un deuxième mode de mise en oeuvre, le composant conducteur peut être disposé de manière adjacente à une couche de matière thermoplastique, ou d'un mélange de matières thermoplastique et thermodurcissable. Dans ce cas où le composant conducteur est disposé en surface d'une couche de matière thermoplastique, ou d'un mélange de matières thermoplastique et thermodurcissable, il est particulièrement important que la couche de matériau thermoplastique ou d'un mélange de matières thermoplastique et thermodurcissable présente un facteur d'ouverture suffisant tel que ci-dessus mentionné pour permettre aux composants conducteurs de se toucher et ainsi d'assurer une conductivité transverse au sein d'un empilement comportant différentes nappes de fibres de carbone unidirectionnelles, en particulier lorsque ce dernier est soumis à une pression de 1 bar. Le composant conducteur peut être disposé entre une nappe de fibres de carbone unidirectionnelles et une couche de matière thermoplastique ou d'un mélange de matières thermoplastique et thermodurcissable ou bien une couche de matière thermoplastique ou d'un mélange de matières thermoplastique et thermodurcissable peut être disposée entre une nappe de fibres de carbone unidirectionnelles et le composant conducteur. Dans ce cas, le composant conducteur pourra être sous la forme de particules ou de fibres conductrices, d'un dépôt métallique conducteur ou bien de fils conducteurs. Le composant conducteur peut être directement déposé sur la nappe de fibres de carbone unidirectionnelles, une couche de matière thermoplastique ou d'un mélange de matières thermoplastique et thermodurcissable étant déposée sur ce dernier. Cette couche de matière thermoplastique ou d'un mélange de matières thermoplastique et thermodurcissable assure, de préférence, la liaison entre le composant conducteur et la nappe de fibres de carbone unidirectionnelles. Il est également possible que le composant conducteur soit déposé sur au moins une partie de la surface de la couche thermoplastique ou d'un mélange de matières thermoplastique et thermodurcissable qui peut être notamment un tissu ou, de préférence un non-tissé, de fibres thermoplastiques ou de fibres thermoplastiques et thermodurcissables en mélange. Dans ce cas, la couche thermoplastique ou d'un mélange de matières thermoplastique et thermodurcissable viendra s'intercaler entre les composants conducteurs et la nappe de fibres de carbone unidirectionnelles.

Lorsqu'un dépôt métallique conducteur est utilisé, celui-ci peut être réalisé par tout procédé approprié, tel qu'un dépôt en phase vapeur, un frittage, un dépôt sous vide, une pulvérisation cathodique ou un dépôt électrolytique. Le dépôt métallique peut, par exemple, être réalisé à raison de 0,5 à 5 g/m$^2$. Il est également possible de réaliser les dépôts métalliques en surface selon des lignes continues, vagues ou selon d'autres motifs. De préférence, un contact sera établi entre les différents motifs, par exemple, par l'utilisation de lignes croisées, de manière à assurer une conductivité dans au moins une direction. De préférence, un dépôt métallique sera réalisé, de manière à recouvrir, au moins 5% de la surface sur laquelle il est déposé, et préférentiellement au moins 10 à 40% de cette surface, et notamment de 10 à 60% de cette surface, et créera, de préférence, un réseau conducteur continu. Il est également possible d'avoir une métallisation selon des lignes parallèles, et d'obtenir un croisement des lignes lors d'un empilement de plusieurs matériaux selon l'invention et ainsi obtenir une conductivité transverse au sein de l'empilement. De préférence, la métallisation est réalisée selon au moins une série de lignes parallèles entre elles, mais non parallèles à la direction des fibres de la ou des nappes unidirectionnelles les plus proches, et de préférence selon au moins deux séries de lignes parallèles sécantes. Ces mêmes configurations de lignes parallèles peuvent être mise en oeuvre, lorsque des fils conducteurs sont utilisés. De tels fils conducteurs pourront présenter un titre individuel, par exemple, de 5 dTex à 100 dTex, et, de préférence de 20 à 80 dTex. De tels fils conducteurs, par exemple en graphite ou en un métal, présenteront, de préférence une résistivité linéaire relativement faible, de préférence de $10^{-3}$ à $10^9$ $\Omega$/cm, et préférentiellement de de $10^{-3}$ à $10^2$ $\Omega$/cm.

Tout comme dans le cas d'un dépôt métallique, les fils conducteurs seront déposés, de manière à recouvrir, au moins 5% de la surface sur laquelle ils sont déposés, et préférentiellement au moins 10 à 40% de cette surface et créeront, de préférence, un réseau conducteur continu.

Les **Figures 2A** et **2B** illustrent un mode de réalisation dans lequel est disposée sur un non-tissé **10** lui-même déposé sur une nappe **2** de fibres de carbone unidirectionnelles, une série de fils conducteurs **11** parallèles entre eux, mais formant un angle avec la nappe unidirectionnelle de fibres de carbone, qui est de 50° dans l'exemple illustré. La **Figure 2B** présente un tel matériau **I** comportant une seule nappe de fibres de carbone unidirectionnelles associée sur chacune de ses faces à un non-tissé **10** et à un composant conducteur **11**. Lors de la réalisation d'un empilement, les matériaux **I** seront disposés de manière à ce que les fils conducteurs de deux matériaux successifs se croisent, et ainsi obtenir une conductivité transverse au sein de l'empilement.

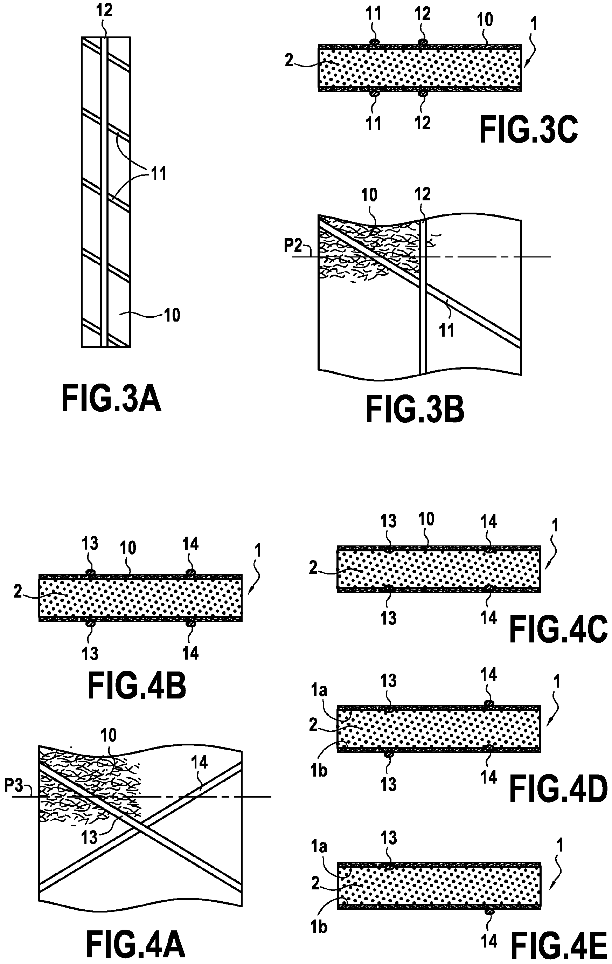

Les **Figures 3A, 3B** et **3C** illustrent un autre mode de réalisation dans lequel est disposée sur un non-tissé **10** lui-même déposé sur une nappe **2** de fibres de carbone unidirectionnelles, une série de fils conducteurs **11** parallèles entre eux mais formant un angle avec la nappe unidirectionnelle de fibres de carbone, qui est de 50° dans l'exemple illustré comme dans le cas de la **Figure 2A.** Mais, de manière additionnelle, un fil conducteur **12** s'étendant parallèlement aux fibres de la nappe unidirectionnelle **2** de carbone est également déposé.

Les **Figures 4A** et **4B** illustrent un autre mode de réalisation dans lequel est disposée sur un non-tissé **10** lui-même déposé sur une nappe **2** de fibres de carbone unidirectionnelles, deux séries de fils conducteurs **13** et **14** parallèles entre eux dans chaque série. Les fils conducteurs **13** et **14** de ces deux séries sont sécants et forment chacun un angle avec la nappe unidirectionnelle de fibres de carbone, qui est, respectivement de +50° et de -50° dans l'exemple illustré. Il est également possible comme présenté **Figure 4C** que les fils conducteurs **13** et **14** soient positionnés entre les non-tissés **10** et la nappe **2** de fibres unidirectionnelles. La **Figure 4D** illustre un autre mode de réalisation dans lequel, sur la face **1a** de la nappe, les fils conducteurs **13** sont positionnés entre le non-tissé **10** et la nappe **2** de fibres unidirectionnelles, et les fils conducteurs **14** sont positionnés sur le non-tissé **10** alors que sur la face **1b,** les fils conducteurs **14** sont positionnés entre le non-tissé **10** et la nappe **2** de fibres unidirectionnelles et les fils conducteurs **13** sont positionnés sur le non-tissé **10.** La **Figure 4E** illustre un autre mode de réalisation dans lequel, sur la face **1a** de la nappe, des fils conducteurs **13** sont positionnés entre le non-tissé **10** et la nappe **2** de fibres unidirectionnelles, alors que sur la face **1b,** des fils conducteurs **14** sont positionnés sur le non-tissé **10.** Comme dans les cas précédents, les fils conducteurs **13** et **14** sont parallèles entre eux dans chaque série, mais les fils conducteurs **13** et **14** de ces deux séries sont sécants et les fils conducteurs de chaque série forment un angle avec la nappe unidirectionnelle de fibres de carbone.

Toutes ces variantes sont présentées dans le cas d'un matériau ne comportant qu'une nappe unidirectionnelle de fibres de carbone, ce matériau étant destiné à être empilé, mais s'appliquent également à un matériau comportant plusieurs nappes unidirectionnelles de fibres de carbone entre lesquelles sont intercalés des composants conducteurs et des couches de matière thermoplastique ou d'un mélange de matières thermoplastique et thermodurcissable.

- Selon un troisième mode de mise en oeuvre, le composant conducteur peut également se présenter sous la forme de particules, telles que de la poudre de carbone, ou de fibres courtes telles que des fibres de carbone, en mélange avec une poudre d'une matière thermoplastique, ou d'un mélange de matières thermoplastique et thermodurcissable. Le rapport massique particules conductrices / polymère thermoplastique ou particules conductrices / mélange de matières thermoplastique et thermodurcissable sera, notamment, de 0,3% à 20% et le rapport massique fibres conductrices / polymère thermoplastique ou fibres conductrices / mélange de matières thermoplastique et thermodurcissable sera, notamment, de 5% à 20%. Dans ce cas, le mélange composant conducteur/poudre d'une matière thermoplastique ou d'un mélange de matières thermoplastique et thermodurcissable sera déposé directement à la surface de la nappe de fibres unidirectionnelles.

De manière préférée, la ou les couches perméables de matière thermoplastique ou d'un mélange de matières thermoplastique et thermodurcissable présentes dans le matériau sont sous la forme d'un non-tissé, ce qui permet de conférer des propriétés mécaniques améliorées à la pièce composite finale obtenue. Par non-tissé, qui peut également être nommé « voile », on entend classiquement un ensemble de fibres continues ou courtes disposées aléatoirement. Ces non-tissés ou voiles pourront par exemple être produits par les procédés voie sèche (« Drylaid »), voie humide (« Wetlaid »), par voie fondue (« Spunlaid »), par exemple par extrusion (« Spunbond »), extrusion soufflage («Meltblown»), ou par filage avec solvant (« electrospinning », « Flashspining »), bien connus de l'homme du métier. En particulier, les fibres constitutives du non-tissé peuvent présenter des diamètres moyens compris dans la gamme allant de 0,5 et 70 $\mu$m, et préférentiellement dans la gamme allant de 0,5 et 20 $\mu$m. Les non-tissés peuvent être constitués de fibres courtes ou, de préférence, de fibres continues. Dans le cas d'un non-tissé de fibres courtes, les fibres peuvent présenter, par exemple, une longueur comprise entre 1 et 100 mm. Les non-tissés offrent une couverture aléatoire et, de préférence, isotropique.

De manière préférée, la couche formée à la fois de la matière thermoplastique ou d'un mélange de matières thermoplastique et thermodurcissable et du composant conducteur présente, de préférence, une conductivité dans au moins une direction d'au moins 500 S/m, et de préférence de 5000 à 20000 S/m. Dans un tel cas, le composant conducteur est directement présent sur au moins une partie de la surface de la couche formée à la fois de la matière thermoplastique ou du mélange de matières thermoplastique et thermodurcissable et du composant conducteur. Néanmoins, selon un mode de réalisation non préféré, il est également possible que le composant conducteur soit encapsulé dans une matière dans laquelle il serait momentanément isolé et que son pouvoir conducteur ne soit révélé que lors de la constitution de la pièce composite finale. Ce serait, par exemple, le cas si le composant conducteur est présent sous la forme de particules encapsulées dans un polymère soluble dans la matrice de résine qui va être diffusée au sein du matériau lors de la réalisation de la pièce composite. Certaines polyethersulfones sont, par exemple, solubles dans des résines époxydes.

Dans le cadre de l'invention, par « nappe unidirectionnelle de fibres de carbone », on entend une nappe constituée exclusivement ou quasi-exclusivement de fibres de carbone déposées selon une même direction, de manière à s'étendre de manière sensiblement parallèle les unes aux autres. En particulier, selon un mode de réalisation particulier de l'invention, la nappe unidirectionnelle ne comporte aucun fil de trame venant entrelacer les fibres de carbone, ni même de couture qui aurait pour but de donner une cohésion à la nappe unidirectionnelle avant son association avec la couche perméable comportant au moins un élément conducteur. Ceci permet en particulier d'éviter toute ondulation au sein de la nappe unidirectionnelle.

Dans la nappe unidirectionnelle, les fils de carbone sont, de préférence, non associés à un liant polymérique et donc qualifiés de secs, c'est-à-dire qu'ils ne sont ni imprégnés, ni enduits, ni associés à un quelconque liant polymérique avant leur association à la couche perméable. Les fibres de carbone sont, néanmoins, le plus souvent caractérisées par un taux massique d'ensimage standard pouvant représenter au plus 2% de leur masse.

En particulier, la matière thermoplastique ou le mélange de matières thermoplastique et thermodurcissable formant la ou les couches perméables représente de 0,5 à 10% de la masse totale du matériau, et de préférence de 1 à 3% de la masse totale du matériau.

Les fibres constitutives des nappes unidirectionnelles sont, de préférence, continues. Les nappes unidirectionnelles peuvent être constituées de un ou, de préférence, plusieurs fils de carbone. Un fil de carbone est constitué d'un ensemble de filaments et comporte, en général, de 1 000 à 80 000 filaments, avantageusement de 12 000 à 24 000 filaments. De façon, particulièrement préférée, dans le cadre de l'invention, des fils de carbone de 1 à 24 K, par exemple, de 3K, 6K, 12K ou 24K, et préférentiellement de 12 et 24K, sont utilisés. Par exemple, les fils de carbone présents au sein des nappes unidirectionnelles, présentent un titre de 60 à 3800 Tex, et préférentiellement de 400 à 900 tex. La nappe unidirectionnelle peut être réalisée avec tout type de fils de carbone, par exemple, des fils Haute Résistance (HR) dont le module en traction est compris entre 220 et 241GPa et dont la contrainte à rupture en traction est comprise entre 3450 et 4830MPa, des fils de Module Intermédiaire (IM) dont le module en traction est compris entre 290 et 297GPa et dont la contrainte à la rupture en traction est comprise entre 3450 et 6200MPa et des Fils Haut Module (HM) dont le module en traction est compris entre 345 et 448GPa et dont la contrainte à rupture en traction est comprise entre 3450 et 5520Pa (d'après le « ASM Handbook », ISBN 0-87170-703-9, ASM International 2001).

La ou les nappes de fibres de carbone unidirectionnelles utilisées dans le cadre de l'invention présentent, de préférence, une masse surfacique de 100 à 280 g/m$^2$.

Pour la constitution d'une nappe unidirectionnelle, il est possible d'étaler ou non les fils utilisés classiquement disponibles dans le commerce. A titre d'exemple, l'épaisseur d'une nappe unidirectionnelle de carbone, au sein d'un matériau selon l'invention, peut être de 90 à 270 $\mu$m environ.

Au sein de chaque nappe unidirectionnelle présente dans le matériau, les filaments ou fibres de carbone sont, de préférence, disposés de manière à assurer une couverture quasi-totale, et de préférence totale, sur toute la surface de la nappe.

A titre d'exemple de matière thermoplastique pouvant être utilisée pour la constitution de la couche perméable présente dans le matériau intermédiaire selon l'invention ou de la résine injectée, on peut citer les polyamides (par exemple PA6, PA12, PA11, PA6,6, PA 6,10, PA 6,12, ...), Copolyamides, les polyamides - block ether ou ester (par exemple, PEBAX, PEBA), les polyphtalamides, les polyesters (par exemple, les polyéthylène téréphtalate -PET-, polybutylène téréphtalate - PBT-...), les copolyesters, les polyuréthanes thermoplastiques, les polyacétales, les polyoléfines en C2-C8 (par exemple, les polypropylènes - PP, les polyéthylènes haute densité - HDPE, les polyéthylènes basse densité - LDPE, les polyéthylènes basse densité linéaire -LLDPE et leurs copolymères), les polyéthersulfones, les polysulfones, les polyphénylènes sulfones, les polyétheréthercétones, les polyéthercétonecétone, les poly(sulfure de phénylène), les polyétherimides, les polyimides thermoplastiques, les polymères à cristaux liquides, les phénoxys, les copolymères à blocs tels que les copolymères styrène-butadiene-méthylméthacrylate, les copolymères méthylméthacrylate-acrylate de butyl-méthylméthacrylate et leurs mélanges.

A titre d'exemple de matière thermodurcissable pouvant être utilisée pour la constitution de la couche perméable présente dans le matériau intermédiaire selon l'invention ou de la résine injectée, on peut citer les époxydes, les polyesters insaturés, les vinylesters, les résines phénoliques, les polyimides, les bismaléimides. les résines phénol-formaldéhydes, urée-formaldéhydes, les 1,3,5-triazine-2,4,6-triamines (mélamine), les benzoxazines, les esters de cyanates, et leurs mélanges.

La matière thermodurcissable pourra également comprendre un ou plusieurs agents durcisseurs, bien connus de l'homme du métier pour être utilisés avec les polymères thermodurcissables sélectionnés.

Les tissus et non-tissés qui peuvent être utilisés dans la ou les couches perméables peuvent être constitués de fibres de même nature, mais également d'un mélange de fibres constituées de ces matériaux. La matière est, bien entendu, adaptée aux différents types de systèmes thermodurcissables ou thermoplastiques utilisés pour la constitution de la matrice, lors de la réalisation ultérieure des pièces composites.

De manière préférée, la liaison entre composant conducteur et nappe unidirectionnelle peut être assurée par thermoliage, c'est-à-dire par chauffage, en utilisant le caractère collant à chaud de la matière thermodurcissable, ou de préférence, de la matière thermodurcissable présente formant la couche perméable, suivi d'un refroidissement. Un exemple d'un tel matériau est une nappe unidirectionnelle de fibres de carbone associée sur chacune de ses faces à un non-tissé de fibres à base d'une matière thermoplastique, ces deux non-tissés assurant la cohésion du matériau grâce à leur caractère thermoplastique. Le composant conducteur peut être intégré dans les fibres du non-tissé ou présent en surface de ce dernier. Dans le cas de l'utilisation d'un non-tissé métallisé en surface, celui-ci pourra n'être métallisé que sur une portion de sa surface comme détaillé précédemment, de façon intermittente ou selon un motif défini, afin d'assurer la fonction de thermoliage par les zones non métallisées. Un dépôt métallique peut également être réalisé directement en surface de la nappe, puis recouvert par un non-tissé. Il peut également être envisagé d'obtenir le matériau intermédiaire conducteur en métallisant le complexe nappe unidirectionnelle / couche(s) perméable(s) non conductrice(s) directement, ces dernières étant préalablement associées, de préférence par thermoliage. Les matériaux étant par la suite utilisés de préférence par dépose automatisée mettant en oeuvre une étape ultime de thermoliage pour les associer et créer ainsi une préforme, la métallisation sera, là encore, de préférence, réalisée uniquement sur une portion de la surface comme détaillé précédemment.

Selon un mode de réalisation particulier, les matériaux selon l'invention ne comportent ni tissage, ni couture, ni tricotage. Il est ainsi possible d'éviter des irrégularités pouvant affecter les propriétés mécaniques de la pièce finale obtenue.

Dans les matériaux selon l'invention qui comportent plusieurs composants conducteurs et couches perméables, ces derniers peuvent être tous identiques comme, notamment illustré **Figures 3C, 4B** et **4C,** ou différer les uns des autres comme, notamment illustré **Figures 4D** et **4E.** Il en va de même des nappes unidirectionnelles. Pour privilégier l'homogénéité des performances, on pourra préférer utiliser des couches s'intercalant entre les nappes unidirectionnelles toutes identiques et des nappes unidirectionnelles également toutes identiques. Les matériaux selon l'invention sont, avantageusement, constitués au moins à 80% en masse, voire exclusivement, de nappes unidirectionnelles de fibres de carbone et de composants conducteurs et couches perméables telles que définies dans le cadre de l'invention.

Selon un mode de réalisation particulier, le matériau selon l'invention comporte une seule nappe de fibres de carbone unidirectionnelles, associée sur une seule ou sur chacune de ses faces à au moins un composant conducteur associé ou intégré à une couche perméable en une matière thermoplastique ou en un mélange de matières thermoplastique et thermodurcissable. Un tel matériau est destiné à être utilisé sous la forme d'un empilement, lors de la réalisation de pièces composites. Un matériau constitué exclusivement de trois couches, à savoir une nappe de fibres de carbone unidirectionnelles disposées entre deux ensembles composants conducteurs + couche perméable est un exemple de matériau selon l'invention. Lorsqu'un tel matériau sera utilisé pour la conception de pièces composites, il sera le plus souvent utilisé sous la forme d'un empilement, de sorte que deux ensembles composants conducteurs + couche perméable seront intercalés entre deux nappes de fibres de carbone unidirectionnelles.

Selon un autre mode de réalisation particulier, le matériau selon l'invention comprend plusieurs nappes de fibres de carbone unidirectionnelles, avec au moins deux nappes de fibres de carbone unidirectionnelles s'étendant selon des directions différentes et dans lequel au moins un composant conducteur associé ou intégré à une couche perméable en une matière thermoplastique ou en un mélange de matières thermoplastique et thermodurcissable est intercalé entre deux nappes successives de fibres de carbone unidirectionnelles. De préférence, un tel matériau multiaxial sera constitué d'une alternance de nappes de fibres de carbone unidirectionnelles et d'ensembles composants conducteurs + couche perméable. Toutes les nappes unidirectionnelles peuvent avoir des directions différentes ou seulement certaines d'entre elles, les autres pouvant avoir des directions identiques. Dans le cas où plusieurs nappes auront des directions identiques, il ne s'agira pas de deux nappes consécutives. Sinon, les nappes unidirectionnelles présenteront, de préférence des caractéristiques identiques. Les orientations privilégiées sont le plus souvent, celles faisant un angle de 0°, + 45° ou - 45° (correspondant également à +135°), et + 90° avec l'axe principal de la pièce à réaliser. Le 0° correspond à l'axe de la machine permettant de réaliser l'empilement, c'est-à-dire à l'axe qui correspond à la direction d'avancement de l'empilement lors de sa conception. L'axe principal de la pièce qui est le plus grand axe de la pièce se confond généralement avec le 0°. Il est, par exemple, possible de réaliser des empilements quasi-isotropes, symétriques ou orientés en choisissant l'orientation des plis. A titre d'exemples d'empilement quasi-isotrope, on peut citer l'empilement selon les angles 45°/0°/135°/90°, ou 90°/135°/0°/45°. A titre d'exemples d'empilement symétrique, on peut citer 0°/90°/0°, ou 45°/135°/45°. En particulier, des matériaux intermédiaires comprenant de 2 à 32 nappes unidirectionnelles, notamment 2, 3, 4, 8, 16, 24 et 32 nappes unidirectionnelles pourront être réalisés. Entre deux nappes unidirectionnelles, seront intercalés des composants conducteurs, associés ou intégrés à une couche perméable à base d'une matière thermoplastique, ou d'un mélange de matières thermoplastique et thermodurcissable, tels que précédemment décrits.

Les matériaux selon l'invention sont destinés à être associés à une matrice de résine pour la réalisation ultérieure de pièces composites, pour l'aéronautique notamment. Les matériaux selon l'invention permettent à la fois d'allier des propriétés satisfaisantes en termes de conductivité et de propriétés mécaniques, répondant aux exigences dans le domaine de l'aéronautique. Dans le cadre de l'invention, des composants conducteurs, associés ou intégrés à une couche perméable à base d'une matière thermoplastique, ou d'un mélange de matières thermoplastique et thermodurcissable précédemment décrits sont utilisés en combinaison avec une ou plusieurs nappes de fibres de carbone unidirectionnelles, pour améliorer la conductivité électrique transverse des matériaux obtenus.

La matrice de résine peut être de nature thermoplastique ou de préférence thermodurcissable, ou constituée d'un mélange de résines thermodurcissable et thermoplastique. Les matériaux selon l'invention peuvent être utilisés, notamment, pour la réalisation de pièces aéronautiques qui nécessitent de bonnes propriétés en termes de conductivité électrique. De telles pièces pourront être réalisées par tout procédé direct connu, tels que les procédés par infusion ou injection de résine thermodurcissables, voire thermoplastique. La matrice utilisée est, de préférence, de type thermodurcissable.

La présente invention concerne donc également un procédé de fabrication d'une pièce composite caractérisé en ce qu'il comporte les étapes suivantes :

a) disposer d'au moins un matériau selon l'invention,

b) diffuser, par infusion ou injection, une résine thermodurcissable, une résine thermoplastique ou un mélange de telles résines, au sein du ou des matériaux,

c) consolider la pièce souhaitée par une étape de polymérisation/réticulation suivant un cycle défini en température et sous pression, suivi d'un refroidissement.

Selon certains modes de mise en oeuvre, le procédé selon l'invention comprend une étape d'empilement de plusieurs matériaux selon l'invention. En particulier, un tel empilement pourra être réalisé à partir d'un matériau selon l'invention comportant une seule nappe de fibres de carbone unidirectionnelles, tel que précédemment décrit. Dans un tel cas, il est possible de prévoir une étape consistant à solidariser l'empilement sous la forme d'une préforme.

Un tel empilement pourra comprendre un grand nombre de nappes unidirectionnelles, en général au moins quatre et dans certains cas plus de 100, voire plus de 200 nappes unidirectionnelles. Ces nappes de fibres de carbone unidirectionnelles seront, le plus souvent, orientées selon au moins deux, trois, ou quatre directions différentes, comprises entre +90° et -90° par rapport à la direction principale de la pièce finale obtenue.

De manière préférée, dans le cadre de l'invention, cet empilement est effectué de façon automatisée. De façon avantageuse, l'étape consistant à solidariser l'empilement est réalisée par thermoliage en utilisant le caractère collant à chaud de la matière thermoplastique ou thermodurcissable présente dans les couches conductrices perméables. De manière préférée, dans le cadre de l'invention, la résine thermodurcissable ou thermoplastique, ou un mélange de telles résines, nécessaire pour la réalisation d'une pièce composite est ajoutée au(x) matériau(x) selon l'invention par infusion sous pression réduite, notamment sous une pression inférieure à la pression atmosphérique, notamment inférieure à 1 bar et, de préférence, comprise entre 0,1 et 1 bar.

La pièce composite est obtenue après une étape de traitement thermique. En particulier, la pièce composite est obtenue généralement par un cycle de consolidation classique des polymères considérés, en effectuant un traitement thermique, recommandé par les fournisseurs de ces polymères, et connu de l'homme du métier. Cette étape de consolidation de la pièce souhaitée est réalisée par polymérisation/réticulation suivant un cycle défini en température et sous pression, suivie d'un refroidissement. La pression appliquée lors du cycle de traitement est faible dans le cas de l'infusion sous pression réduite et plus forte dans le cas de l'injection dans un moule RTM.

Les pièces composites susceptibles d'être obtenues selon le procédé de l'invention présentent une conductivité transverse d'au moins 20 S/m, et de préférence de 60 à 300 S/m. La conductivité transverse peut être définie comme étant l'inverse de la résistivité qui est elle-même égale à la résistance que multiplie la surface et que divise l'épaisseur de la pièce. En d'autres termes, la conductivité transverse est la capacité qu'à la pièce à propager et conduire le courant électrique au sein de son épaisseur et peut être mesurée selon la méthode détaillée dans les exemples.

De manière préférée, les pièces présentent un taux volumique de fibres de 55 à 65 % et notamment de 57 à 63 %. Le taux volumique de fibres (TVF) d'une pièce composite est calculé à partir de la mesure de l'épaisseur d'une pièce composite en connaissant la masse surfacique de la nappe unidirectionnelle de carbone et les propriétés de la fibre de carbone, à partir de l'équation suivante :

$$TVF\,(\%) = \frac{n_{plis} \times \text{Masse surfacique UD}_{carbone}}{\rho_{\text{fibre carbone}} \times e_{plaque}} \times 10^{-1} \qquad \textbf{(1)}$$

Où $e_{plaque}$ est l'épaisseur de la plaque en mm,
$\rho_{\text{fibre carbone}}$ est la densité de la fibre de carbone en $g/cm^3$,
la masse surfacique UD carbone est en $g/m^2$.

En sélectionnant un taux volumique de fibres assez élevé, en particulier de 60 à 65%, il est possible d'optimiser encore la conductivité transverse de la pièce composite obtenue.

Les exemples ci-après permettent d'illustrer l'invention, mais n'ont aucun caractère limitatif.

## EXEMPLES DE REALISATION

Méthode de mesure de la conductivité des couches associant composant conducteur et matière thermoplastique ou mélange de matières thermoplastique et thermodurcissable

Un échantillon de 380 mm de long x 80 mm de large est découpé. Cet échantillon est ensuite pincé par deux mords métalliques sur sa largeur. Ces pinces métalliques sont reliées à une alimentation (TTi EL302P), qui envoie un courant de 1A à travers l'échantillon. Au centre de l'échantillon, deux électrodes reliées à un voltmètre et distantes de 200mm (ISM 1000) permettent de mesurer la tension. Les électrodes sont fixées à un bâti, ce qui permet de toujours faire la mesure au même endroit ; la distance entre les électrodes est donc fixe. On pourra, de préférence, choisir de découper un échantillon de manière à ce que sa longueur s'étende parallèlement à la direction de conductivité la plus forte.

En utilisant la loi d'Ohm, la résistance de l'échantillon peut être déduite :

$R\,(\Omega) = U/I$ (U étant la tension mesurée en Volt et I l'intensité appliquée avec l'alimentation en Ampère)
$\rho = R * (e * L)/I$ (ρ étant la résistivité en $\Omega$.m)
$\sigma = 1/\rho$ (σ étant la conductivité en S/m)

(I étant la distance entre électrode et L la largeur de l'échantillon).

## Exemple 1

Description des matériaux de départ:

- voile de polyéthylène téréphtalate (PET) de masse surfacique égale à $8g/m^2$. Ce voile est recouvert de Nickel à hauteur de $2,7\ g/m^2$. Le voile provient d'Atlanta Nisseki CLAF (référence Milife TY0503FE), et a été métallisé chez la société Soliani, Via Varesina 122, 22100 Como. Le voile métallisé obtenu présente un grammage de $10,7\ g/m^2$ et une épaisseur de $50\mu m$. Ce voile métallisé a une conductivité de 10005/m et 30000 S/m respectivement dans la direction où la densité de fils est la moins forte et dans la direction où la densité de fils est la plus forte.
- Voile de Polyamide 12 d'épaisseur 69 $\mu$m et de $4g/m^2$, commercialisé sous la référence 128D04 par la société Protechnic (Cernay, France)
- nappe unidirectionnelle réalisée avec des fils IMA 12K de la société Hexcel, de manière à obtenir une masse surfacique de $194g/m^2$.

Préparation du matériau

Un empilement voile polyamide/nappe de carbone/voile polyamide/voile métallisé est réalisé et lié thermiquement conformément au procédé décrit pages 27 à 30 de la demande WO 2010/046609. Les paramètres utilisés par référence au tableau 3 de la demande WO 2010/046609 sont donnés dans le **Tableau 1** ci-après.

## Exemple 2

Description des matériaux de départ:

- fils conducteurs F901 J022 commercialisés par la société Resistat (Enca, NC, Etats-Unis)
- Nylon 6-6 avec carbone conducteur en surface
- 24dTex / 22 Denier
- Tenacité 5gr/denier
- Elongation à rupture : 41%
- Résistivité moyenne : $2,1.10^5$ Ohm/cm
- Voile de copolyamide d'épaisseur $59\mu$m et de $3g/m^2$, commercialisé sous la référence 1R8D03 par la société Protechnic (Cernay, France)
- nappe unidirectionnelle réalisée avec des fils IMA 12K de la société Hexcel, de manière à obtenir une masse surfacique de $194g/m^2$.

Préparation du matériau

Un empilement fils conducteurs/voile polyamide/nappe de carbone/voile polyamide/fils conducteurs conforme aux **Figure 3A** à **3C** est réalisé. La distance entre deux fils **11** parallèles est de 10 mm et la distance entre le fil **12** et le bord du non-tissé **10** est de 3,2 mm. Cet empilement est réalisé et lié thermiquement conformément au procédé décrit pages 27 à 30 de la demande WO 2010/046609. Les paramètres utilisés par référence au tableau 3 de la demande WO 2010/046609 sont donnés dans le **Tableau 1** ci-après.

## Exemple 3

Description des matériaux de départ:

- fils conducteurs F901 J022 commercialisés par la société Resistat (Enca, NC, Etats-Unis)
- Voile de copolyamide d'épaisseur $59\mu$m et de $3g/m^2$, commercialisé sous la référence 1R8D03 par la société Protechnic (Cernay, France)
- nappe unidirectionnelle réalisée avec des fils IMA 12K de la société Hexcel, de manière à obtenir une masse surfacique de $194g/m^2$.

Préparation du matériau

Un empilement conforme à l'exemple 1 est réalisé, à l'exception du fait que les fils conducteurs sont disposés entre le voile et la nappe, comme illustré **Figure 4C** de manière à obtenir un empilement voile polyamide/fils conducteurs/nappe de carbone/fils conducteurs/voile polyamide. Cet empilement est lié thermiquement conformément au procédé décrit pages 27 à 30 de la demande WO 2010/046609. Les paramètres utilisés par référence au tableau 3 de la demande WO 2010/046609 sont donnés dans le **Tableau 1** ci-après.

## Exemple 4

Description des matériaux de départ:

- fils conducteurs F901 F044 commercialisés par la société Resistat (Enca, NC, Etats-Unis)
- Nylon 6 avec carbone conducteur en surface
- 49dTex / 44 Denier
- Ténacité 4gr/denier
- Elongation à rupture : 50%
- Résistivité moyenne : $1.10^5$ Ohm/cm
- Voile de copolyamide d'épaisseur $59\mu$m et de $3g/m^2$, commercialisé sous la référence 1R8D03 par la société Protechnic (Cernay, France)

- nappe unidirectionnelle réalisée avec des fils IMA 12K de la société Hexcel, de manière à obtenir une masse surfacique de 194g/m$^2$.

Préparation du matériau

Un empilement fils conducteurs/voile polyamide/nappe de carbone/voile polyamide/fils conducteurs conforme à l'exemple 1 est réalisé en utilisant des fils conducteurs F901 F044 et lié thermiquement conformément au procédé décrit pages 27 à 30 de la demande WO 2010/046609. Les paramètres utilisés par référence au tableau 3 de la demande WO 2010/046609 sont donnés dans le **Tableau 1** ci-après.

**Tableau 1**

| Exemple | Vitesse ligne (m/min) | Tbarre (°C) (9) | Tbarre (°C) (10) | Tpréchauffage voile (°C) (11a&11b) | Tbarres (°C) (12a et 12b) |
|---|---|---|---|---|---|
| 1 | 1,8 | 200 | 200 | 140 | 210 |
| 2 | 1,3 | 200 | 200 | 120 | 145 |
| 3 | 1,3 | 200 | 200 | 120 | 145 |
| 4 | 1,3 | 200 | 200 | 120 | 145 |

Le **Tableau 2** présente les épaisseurs des voiles obtenues après contre-collage sur la nappe unidirectionnelle.

**Tableau 2**

| Exemple | Epaisseur Voile PET métallisé + voile Polyamide | Voile Polyamide + fils conducteurs |
|---|---|---|
| 1 | 30 $\mu$m | - |
| 2 | - | 25 $\mu$m |
| 3 | - | 25 $\mu$m |
| 4 | - | 25 $\mu$m |

**Exemple 5**

Préparation des pièces composites

Le matériau est ensuite utilisé pour faire un stratifié, selon un empilement de 24 plis, puis de la résine est injectée selon un procédé RTM dans un moule fermé. La dimension du panneau est de 340 x 340 x 4,31 mm pour un TVF visé de 60%. Pour obtenir un TVF proche de 55%, l'épaisseur du cadre choisie est de 4,73mm et pour un TVF proche de 65%, l'épaisseur du cadre est de 4,00mm. A un empilement de pli donné, si on augmente ou si on diminue l'épaisseur du moule, alors la pièce finie aura un TVF (une épaisseur) plus ou moins important, puisque les essais sont réalisés dans un moule fermé. Le drapage choisi pour ces exemples est [45/0/135/90]3s.

L'empilement de 24 plis est déposé dans un moule en aluminium puis ce moule est placé sous une presse à 10 bars. L'ensemble est monté en température à 120°C. La résine injectée est la résine RTM6 de la société Hexcel. La résine est préchauffée à 80°C dans une machine d'injection, puis injectée dans un moule comportant une entrée pour la résine et une sortie. Une fois que de la résine est récupérée en sortie, l'injection est arrêtée et le moule est monté à 180°C pendant 2 heures. Durant cette période, le moule est maintenu sous une pression de 10 bars.

A titre de comparaison, des empilements réalisés avec des matériaux constituées d'une nappe de fils de carbone IMA de la société Hexcel de 194 g/m$^2$, associée sur chacune de ses faces à un voile de polyamide 12, 128D04 de la société Protechnic (Cernay, France) à 4g/m$^2$, à différents taux volumiques de fibres ont également été effectués.

Mesure de la conductivité transverse des pièces composites

Trois à quatre échantillons sont découpés dans le panneau aux dimensions 36mm x 36mm. La surface de chaque échantillon est sablée afin d'exposer la surface des fibres de carbone. Cette étape de sablage n'est pas nécessaire si un tissu d'arrachage a été utilisé pour la préparation des pièces. Ensuite, les faces recto/verso de chaque échantillon sont traitées afin de déposer une couche de métal conducteur, typiquement d'or par pulvérisation cathodique, traitement plasma ou évaporation sous vide. Les dépôts d'or ou de tout autre métal doivent être retirés des champs des éprouvettes par sablage ou par ponçage. Ce dépôt de métal conducteur permet d'avoir une faible résistance de contact entre l'échantillon et le moyen de mesure.

Une source de puissance (bloc d'alimentation TTi EL302P programmable 30V/2A, Thurlby Thandar Instruments, Cambridge UK) capable de faire varier le courant et la tension est utilisée pour déterminer la résistance. L'échantillon est en contact avec les 2 électrodes du bloc d'alimentation ; ces électrodes sont mises en contact à l'aide d'une pince. Il faut s'assurer que les électrodes ne sont pas en contact les unes avec les autres ou en contact avec tout autre élément métallique. Un courant de 1 A est appliqué et la résistance est mesurée par deux autres électrodes reliées à un voltmètre/ohmmètre. L'essai est effectué sur chaque échantillon à mesurer. La valeur de la résistance est ensuite ramenée à la valeur de la conductivité à l'aide des dimensions de l'échantillon et des formules suivantes :

$$\text{Résistivité (Ohm.m)} = \text{Résistance (Ohm)} \times \text{Surface (m}^2\text{)} / \text{Epaisseur (m)}$$

$$\text{Conductivité (S/m)} = 1 / \text{Résistivité}$$

Les résultats sont présentés dans la **Tableau 3** ci-après.

**Tableau 3**

| Description | Conductivité 4 points (S/m) | | | Moyenne (S/m) | Ecart type (S/m) |
|---|---|---|---|---|---|
| Exemple comparatif 1 - 55,7% TVF | 0,55 | 1,77 | 0,76 | **1,03** | 0,65 |
| Exemple comparatif 2 - 61,4% TVF | 10,48 | 16,37 | 8,99 | **11,94** | 3,90 |
| Exemple comparatif 3 - 64,7% TVF | 15,72 | 23,25 | 20,58 | **19,85** | 3,82 |
| Exemple 5 réalisé avec le matériau de l'exemple 1 - 58,4% TVF | 47,81 | 88,63 | 91,26 | **75,90** | 24,36 |

L'utilisation d'un composant conducteur permet donc d'améliorer fortement la conductivité. Par ailleurs, le TVF semble avoir une influence sur la conductivité transverse obtenue. Il est donc préférable de réaliser des pièces composites avec un TVF de 55 à 70%, préférentiellement de 60% à 65%, compte tenu des paramètres mécaniques à prendre également en compte.

**Exemple 5**

- Voile de copolyamide d'épaisseur 131$\mu$m et de 6g/m$^2$, commercialisé sous la référence 1R8D06 par la société Protechnic (Cernay, France)
- nappe unidirectionnelle réalisée avec des fils IMA 12K de la société Hexcel, de manière à obtenir une masse surfacique de 194g/m$^2$.

Un empilement voile polyamide/nappe de carbone/voile polyamide est réalisé et lié thermiquement conformément au procédé décrit pages 27 à 30 de la demande WO 2010/046609. Les paramètres utilisés par référence au tableau 3 de la demande WO 2010/046609 sont donnés dans le **Tableau 4** ci-dessous.

**Tableau 4**

| Vitesse (m/min) | Tbarre (°C) (9) | Tbarre (°C) (10) | T° préchauffage voile (°C) (11a & 11b) | Tbarres (°C) (12a & 12b) |
|---|---|---|---|---|
| 1,8 | 200 | 200 | 160 | 180 |

L'empilement est métallisé avec du nickel déposé selon des bandes parallèles de 12mm de large et espacées de 16,3mm et formant un angle de 45 °, par rapport à la nappe unidirectionnelle. La surface du dépôt du nickel représente 42% de la surface totale du matériau. Des dépôts de deux épaisseurs (50 et 200 nm sont réalisés), de manière à obtenir deux matériaux différents.

Avec une épaisseur de 50nm, le ratio éléments conducteur/masse de matière thermoplastique représente 3% en masse. Avec une épaisseur de 200nm, ce ratio est de 12% en masse. La masse surfacique totale par empilement des éléments conducteurs + matière thermoplastique est de 12.4g/m$^2$ pour une épaisseur de 50nm et de 13,5g/m$^2$ pour une épaisseur de 200nm.

Chacun de ces matériaux est ensuite utilisé pour faire un stratifié, selon un empilement de 16 plis, puis de la résine est injectée selon un procédé RTM dans un moule fermé conformément à l'exemple 5. La dimension du panneau est de 340 x 340 x 2,9 mm pour un TVF visé de 60%. Le drapage choisi pour cet exemple est [0/90]4s.

Les mesures de conductivité sont réalisées comme à l'exemple 5, à l'exception que huit échantillons aux dimensions 40mm x 40mm sont découpés dans le panneau, de plus la métallisation est réalisé avec d'un mélange Etain-Zinc et non de l'or.

Les résultats obtenus sont présentés dans les **Tableaux 5A** et **5B** ci-après et montrent que plus l'épaisseur du dépôt est importante, plus la conductivité est élevée. Ces résultats sont comparés avec un échantillon de référence n'ayant pas subi de dépôt nickel. Pour voir le gain apporté par l'invention, les résultats de la référence sont présentés dans le **Tableau 5C.**

**Tableaux 5A** et **5B**

| Epaisseur dépôt nickel - 50 nm | |
| --- | --- |
| **n° échantillon** | **Conductivité 4 points (S/m)** |
| échantillon 1 | 15,7 |
| échantillon 2 | 17,3 |
| échantillon 3 | 10,0 |
| échantillon 4 | 13,3 |
| échantillon 5 | 16,3 |
| échantillon 6 | 12,3 |
| échantillon 7 | 11,7 |
| échantillon 8 | 9,4 |
| **Moyenne =** | **13,3** |
| **Epaisseur dépôt nickel - 200 nm** | |
| **n° échantillon** | **Conductivité 4 points (S/m)** |
| échantillon 1 | 22,8 |
| échantillon 2 | 19,7 |
| échantillon 3 | 19,0 |
| échantillon 4 | 18,6 |
| échantillon 5 | 29,5 |
| échantillon 6 | 24,1 |
| échantillon 7 | 19,2 |
| échantillon 8 | 20,3 |
| **Moyenne =** | **21,6** |

**Tableaux 5C**

| Epaisseur dépôt nickel - 0 nm | |
| --- | --- |
| **n° échantillon** | **Conductivité 4 points (S/m)** |
| échantillon 1 | 1,1 |
| échantillon 2 | 1,3 |

(suite)

| Epaisseur dépôt nickel - 0 nm | |
|---|---|
| n° échantillon | Conductivité 4 points (S/m) |
| échantillon 3 | 0,9 |
| échantillon 4 | 1,2 |
| échantillon 5 | 1,1 |
| échantillon 6 | 1 |
| échantillon 7 | 1,2 |
| échantillon 8 | 1,1 |
| **Moyenne =** | **1,1** |

**Revendications**

1. Matériau (**I**) adapté à la réalisation de pièces composites par un procédé dans lequel une matrice thermoplastique ou thermodurcissable externe est diffusée au sein dudit matériau, comprenant au moins une nappe (**1**) de fibres de carbone unidirectionnelles (**2**) associée, sur au moins une de ses faces (**1a, 1b**), à au moins un composant conducteur (**5, 11, 12, 13, 14**) associé ou intégré à une couche perméable (**3a, 3b, 10**), **caractérisé en ce que** ladite couche perméable est en une matière thermoplastique ou en un mélange de matières thermoplastique et thermodurcissable, et **en ce qu'**elle se présente sous la forme d'une poudre, d'un film poreux, ou, de préférence, d'un non-tissé (**3a, 3b, 10**).

2. Matériau (**I**) selon la revendication 1 précédente, **caractérisé en ce que** le matériau (**I**) contient de 0,5 à 10% de matière thermoplastique ou d'un mélange de matières thermoplastique et thermodurcissable.

3. Matériau (**I**) selon l'une des revendications précédentes, **caractérisé en ce qu'**il comporte une seule nappe (**1**) de fibres de carbone unidirectionnelles (**2**), associée sur une seule ou sur chacune de ses faces (**1a, 1b**) à au moins un composant conducteur (**5, 11, 12, 13, 14**) associé ou intégré à une couche perméable (**3a, 3b, 10**) en une matière thermoplastique ou en un mélange de matières thermoplastique et thermodurcissable, ladite couche perméable se présentant sous la forme d'une poudre, d'un film poreux, ou, de préférence, d'un non-tissé (**3a, 3b, 10**).

4. Matériau (**I**) selon la revendication 1 ou 2, **caractérisé en ce qu'**il comprend plusieurs nappes (**1**) de fibres de carbone unidirectionnelles (**2**), avec au moins deux nappes de fibres de carbone unidirectionnelles s'étendant selon des directions différentes et **en ce qu'**au moins un composant conducteur (**5, 11, 12, 13, 14**) associé ou intégré à une couche perméable (**3a, 3b, 10**) en une matière thermoplastique ou en un mélange de matières thermoplastique et thermodurcissable, ladite couche perméable se présentant sous la forme d'une poudre, d'un film poreux, ou, de préférence, d'un non-tissé (**3a, 3b, 10**) est intercalé entre deux nappes successives de fibres de carbone unidirectionnelles.

5. Matériau (**I**) selon l'une des revendications précédentes, **caractérisé en ce que** la ou les nappes (**1**) de fibres de carbone unidirectionnelles (**2**) et le ou les composants conducteurs (**5, 11, 12, 13, 14**) associé(s) ou intégré(s) à une couche perméable (**3a, 3b, 10**) en une matière thermoplastique ou en un mélange de matières thermoplastique et thermodurcissable, ladite couche perméable se présentant sous la forme d'une poudre, d'un film poreux, ou, de préférence, d'un non-tissé (**3a, 3b, 10**), présents dans le matériau sont liés par couture, par tricotage, par un adhésif ou par thermoliage.

6. Matériau (**I**) selon l'une des revendications précédentes, **caractérisé en ce que** le composant conducteur (**5, 11, 12, 13, 14**) est sous la forme de particules (**5**), de fibres courtes ou de fils (**11, 12, 13, 14**).

7. Matériau (**I**) selon l'une des revendications précédentes **caractérisé en ce que** le rapport massique composant conducteur/matière thermoplastique ou composant conducteur/matières thermoplastique et thermodurcissable est de 0,3 à 50 %, de préférence de 0,5 à 5 %.

8.  Matériau (**I**) selon l'une des revendications précédentes, **caractérisé en ce que** chaque ensemble couche perméable (**3a, 3b, 10**) + élément(s) conducteur(s) (**5, 11, 12, 13, 14**) présente un facteur d'ouverture se situant dans la gamme allant de 30 à 99 %, préférentiellement dans la gamme allant de 40 à 70 %.

9.  Matériau (**I**) selon l'une des revendications précédentes, **caractérisé en ce que** chaque ensemble couche perméable (**3a, 3b, 10**) + élément(s) conducteur(s) (**5, 11, 12, 13, 14**) a une masse surfacique dans la gamme allant de 0,5 à 30 g/m$^2$, de préférence dans la gamme allant de 1 à 15 g/m$^2$.

10. Matériau (**I**) selon l'une des revendications précédentes, **caractérisé en ce que** chaque ensemble couche perméable (**3a, 3b, 10**) + élément(s) conducteur(s) (**5, 11, 12, 13, 14**) présent dans le matériau a une épaisseur de 5 à 30 microns, de préférence de 5 à 20 microns.

11. Matériau (**I**) selon l'une des revendications précédentes, **caractérisé en ce que** chaque ensemble couche perméable (**3a, 3b, 10**) + élément(s) conducteur(s) (**5, 11, 12, 13, 14**) présente une conductivité dans au moins une direction d'au moins 500 S/m, et de préférence de 5000 à 20000 S/m.

12. Matériau (**I**) selon l'une des revendications précédentes, **caractérisé en ce que** la ou les nappes (**1**) de fibres de carbone unidirectionnelles (**2**) et la ou les composants conducteurs (**5, 11, 12, 13, 14**) présents dans le matériau sont liés grâce à la matière thermoplastique ou thermodurcissable de la couche perméable par thermoliage.

13. Matériau (**I**) selon l'une des revendications 1 à 12, **caractérisé en ce que** le composant conducteur (**5**) se présente sous la forme de particules ou de fibres conductrices réparties dans une matrice (**4**) d'une matière thermoplastique d'un mélange de matières thermoplastique et thermodurcissable, formant un tissu ou, de préférence, un non-tissé (**6**).

14. Matériau (**I**) selon l'une des revendications 1 à 12, **caractérisé en ce que** le composant conducteur (**13, 14**) est disposé entre une nappe (**1**) de fibres de carbone unidirectionnelles (**2**) et la couche perméable (**10**) de matière thermoplastique ou d'un mélange de matières thermoplastique et thermodurcissable.

15. Matériau (**I**) selon l'une des revendications 1 à 12, **caractérisé en ce que** la couche perméable (**10**) de matériau thermoplastique ou d'un mélange de matières thermoplastique et thermodurcissable est disposée entre une nappe (**1**) de fibres de carbone (**2**) unidirectionnelles et le composant conducteur (**11, 12, 13, 14**).

16. Matériau (**I**) selon l'une des revendications 1 à 12, 14 ou 15, **caractérisé en ce que** le composant conducteur (**11, 12, 13, 14**) est déposé sur au moins une partie de la surface d'un tissu ou, de préférence d'un non-tissé (**6**), de fibres thermoplastiques ou de fibres thermoplastiques et thermodurcissables en mélange.

17. Matériau (**I**) selon la revendication 14 à 16, **caractérisé en ce que** le composant conducteur se présente sous la forme de particules ou de fibres conductrices, d'un dépôt métallique conducteur ou bien de fils conducteurs (**11, 12, 13, 14**).

18. Matériau (**I**) selon la revendication 17, **caractérisé en ce que** le composant conducteur se présente sous la forme d'un dépôt métallique ou de fils conducteurs (**11, 12, 13, 14**) recouvrant, au moins 5% de la surface sur laquelle il est déposé, préférentiellement au moins 10 à 40% de cette surface, et notamment de 10 à 60% de cette surface, et crée, de préférence, un réseau conducteur continu.

19. Matériau (**I**) selon l'une des revendications 1 à 12, **caractérisé en ce que** le composant conducteur se présente sous la forme de particules ou de fibres courtes, en mélange avec une poudre d'une matière thermoplastique ou d'un mélange de matières thermoplastique et thermodurcissable.

20. Matériau (**I**) selon l'une des revendications précédentes, **caractérisé en ce que** la couche perméable (**3a, 3b, 10**) est en une matière thermoplastique uniquement.

21. Matériau (**I**) selon la revendication 20, **caractérisé en ce que** le composant conducteur (**5, 11, 12, 13, 14**) est associé ou intégré à une couche perméable (**3a, 3b, 10**) en une matière thermoplastique choisie parmi les polyamides, copolyamides, les polyamides - block ether ou ester, les polyphtalamides, les polyesters, les copolyesters, les polyuréthanes thermoplastiques, les polyacétales, les polyoléfines en C2-C8, les polyéthersulfones, les polysulfones, les polyphénylènes sulfones, les polyétheréther Cétones, les polyéther Cétone Cétone, les poly(sulfure de phénylène), les polyétherimides, les polyimides thermoplastiques, les polymères à cristaux liquides, les phénoxys, les copolymères à blocs tels que les copolymères styrène-butadiene-méthylméthacrylate, les copolymères méthylméthacrylate-acrylate de butyl-méthylméthacrylate et leurs mélanges.

22. Matériau (**I**) selon l'une des revendications précédentes, **caractérisé en ce que** le composant conducteur (**5, 11, 12, 13, 14**) est en un matériau conducteur ou seule sa surface est en un matériau conducteur, ledit matériau conducteur étant choisi parmi le carbone, le nickel, l'or, le platine, le palladium, l'argent, le cuivre ou le cobalt.

23. Matériau (**I**) selon l'une des revendications précédentes, **caractérisé en ce que** la ou les nappes (**1**) de fibres de carbone unidirectionnelles (**2**) présentes dans le matériau ont une masse surfacique de 100 à 280 g/m$^2$.

24. Procédé de fabrication d'une pièce composite **caractérisé en ce qu'**il comporte les étapes suivantes :

    a) disposer d'au moins un matériau (**I**) selon l'une des revendications 1 à 23,
    b) diffuser, par infusion ou injection, une résine thermodurcissable, une résine thermoplastique ou un mélange de telles résines, au sein du ou des matériaux,
    c) consolider la pièce souhaitée par une étape de polymérisation/réticulation suivant un cycle défini en température et sous pression, suivi d'un refroidissement.

25. Procédé selon la revendication 24, **caractérisé en ce qu'**il comprend une étape d'empilement de plusieurs matériaux (**I**) selon l'une des revendications 1 à 23.

26. Procédé selon la revendication 25, **caractérisé en ce qu'**il comprend une étape consistant à solidariser l'empilement sous la forme d'une préforme.

27. Procédé selon l'une des revendications 24 à 26, **caractérisé en ce que** la résine thermodurcissable ou thermoplastique ou un mélange de telles résines est ajoutée au(x) matériau(x) par infusion sous pression réduite, notamment sous une pression inférieure à la pression atmosphérique, notamment inférieure à 1 bar et de préférence comprise entre 0,1 et 1 bar.

**Patentansprüche**

1. Material (I), das zur Realisierung von Verbundbauteilen durch ein Verfahren ausgelegt ist, in welchem eine externe thermoplastische oder duroplastische Matrix in dem Material verteilt wird, umfassend mindestens eine Bahn (1) von unidirektionalen Kohlefasern (2), die an mindestens einer ihrer Flächen (1a, 1b) mit mindestens einem leitfähigen Bestandteil (5, 11, 12, 13, 14) verbunden ist, der mit einer durchlässigen Schicht (3a, 3b, 10) verbunden oder darin integriert ist, **dadurch gekennzeichnet, dass** die durchlässige Schicht aus einem thermoplastischen Material oder aus einem Gemisch von thermoplastischen und duroplastischen Materialien besteht, und dadurch, dass sie in Form eines Pulvers, eines porösen Films oder vorzugsweise eines Vlieses (3a, 3b, 10) vorliegt.

2. Material (I) nach dem vorhergehenden Anspruch 1, **dadurch gekennzeichnet, dass** das Material (I) 0,5 bis 10 % eines thermoplastischen Materials oder eines Gemischs von thermoplastischen und duroplastischen Materialien enthält.

3. Material (I) nach einem der vorhergehenden Ansprüche, **dadurch gekennzeichnet, dass** es eine einzige Bahn (1) von unidirektionalen Kohlefasern (2) umfasst, die an einer einzigen oder jeder ihrer Flächen (1a, 1b) mit mindestens einem leitfähigen Bestandteil (5, 11, 12, 13, 14) verbunden ist, der mit einer durchlässigen Schicht (3a, 3b, 10) aus einem thermoplastischen Material oder aus einem Gemisch von thermoplastischen und duroplastischen Materialien verbunden oder darin integriert ist, wobei die durchlässige Schicht in Form eines Pulvers, eines porösen Films oder vorzugsweise eines Vlieses (3a, 3b, 10) vorliegt.

4. Material (I) nach Anspruch 1 oder 2, **dadurch gekennzeichnet, dass** es mehrere Bahnen (1) von unidirektionalen Kohlefasern (2) umfasst, wobei sich mindestens zwei Bahnen von unidirektionalen Kohlefasern in unterschiedliche Richtungen erstrecken und dadurch, dass mindestens ein leitfähiger Bestandteil (5, 11, 12, 13, 14), der mit einer durchlässigen Schicht (3a, 3b, 10) aus einem thermoplastischen Material oder aus einem Gemisch von thermoplastischen und duroplastischen Materialien verbunden oder darin integriert ist, wobei die durchlässige Schicht in Form eines Pulvers, eines porösen Films oder vorzugsweise eines Vlieses (3a, 3b, 10) vorliegt, zwischen zwei aufeinanderfolgenden Bahnen von unidirektionalen Kohlefasern eingefügt ist.

**5.** Material (I) nach einem der vorhergehenden Ansprüche, **dadurch gekennzeichnet, dass** die Bahn(en) (1) von unidirektionalen Kohlefasern (2) und der oder die leitfähige(n) Bestandteil(e) (5, 11, 12, 13, 14), der bzw. die mit einer durchlässigen Schicht (3a, 3b, 10) aus einem thermoplastischen Material oder aus einem Gemisch von thermoplastischen und duroplastischen Materialien verbunden oder darin integriert ist bzw. sind, wobei die durchlässige Schicht in Form eines Pulvers, eines porösen Films oder vorzugsweise eines Vlieses (3a, 3b, 10) vorliegt, die in dem Material vorliegen, durch eine Naht, durch Stricken, durch einen Klebstoff oder durch thermische Verfestigung verbunden sind.

**6.** Material (I) nach einem der vorhergehenden Ansprüche, **dadurch gekennzeichnet, dass** der leitfähige Bestandteil (5, 11, 12, 13, 14) in Form von Partikeln (5), kurzen Fasern oder Fäden (11, 12, 13, 14) vorliegt.

**7.** Material (I) nach einem der vorhergehenden Ansprüche, **dadurch gekennzeichnet, dass** das Massenverhältnis von leitfähigem Bestandteil/thermoplastischem Material oder leitfähigem Bestandteil/thermoplastischen und duroplastischen Materialien bei 0,3 bis 50 %, vorzugsweise bei 0,5 bis 5 % liegt.

**8.** Material (I) nach einem der vorhergehenden Ansprüche, **dadurch gekennzeichnet, dass** jede Einheit von durchlässiger Schicht (3a, 3b, 10) + leitfähige(s) Element(e) (5, 11, 12, 13, 14) einen Öffnungsfaktor aufweist, der sich in dem Bereich von 30 bis 99 %, vorzugsweise in dem Bereich von 40 bis 70 % befindet.

**9.** Material (I) nach einem der vorhergehenden Ansprüche, **dadurch gekennzeichnet, dass** jede Einheit von durchlässiger Schicht (3a, 3b, 10) + leitfähige(s) Element(e) (5, 11, 12,13, 14) ein Flächengewicht in dem Bereich von 0,5 bis 30 g/m$^2$, vorzugsweise in dem Bereich von 1 bis 15 g/m$^2$ aufweist.

**10.** Material (I) nach einem der vorhergehenden Ansprüche, **dadurch gekennzeichnet, dass** jede Einheit von durchlässiger Schicht (3a, 3b, 10) + leitfähige(s) Element(e) (5, 11, 12, 13, 14), die in dem Material vorliegt, eine Dicke von 5 bis 30 Mikrometer, vorzugsweise von 5 bis 20 Mikrometer aufweist.

**11.** Material (I) nach einem der vorhergehenden Ansprüche, **dadurch gekennzeichnet, dass** jede Einheit von durchlässiger Schicht (3a, 3b, 10) + leitfähige(s) Element(e) (5, 11, 12, 13, 14) in mindestens einer Richtung eine Leitfähigkeit von mindestens 500 S/m und vorzugsweise von 5000 bis 20000 S/m aufweist.

**12.** Material (I) nach einem der vorhergehenden Ansprüche, **dadurch gekennzeichnet, dass** die Bahn(en) (1) von unidirektionalen Kohlefasern (2) und der oder die leitfähige(n) Bestandteil(e) (5, 11, 12, 13, 14), die in dem Material vorliegen, dank des thermoplastischen oder duroplastischen Materials der durchlässigen Schicht durch thermische Verfestigung verbunden sind.

**13.** Material (I) nach einem der Ansprüche 1 bis 12, **dadurch gekennzeichnet, dass** der leitfähige Bestandteil (5) in Form von leitfähigen Partikeln oder Fasern vorliegt, die in einer Matrix (4) eines thermoplastischen Materials eines Gemischs von thermoplastischen und duroplastischen Materialien verteilt sind, die ein Gewebe oder vorzugsweise ein Vlies (6) bildet.

**14.** Material (I) nach einem der Ansprüche 1 bis 12, **dadurch gekennzeichnet, dass** der leitfähige Bestandteil (13, 14) zwischen einer Bahn (1) von unidirektionalen Kohlefasern (2) und der durchlässigen Schicht (10) von einem thermoplastischen Material oder einem Gemisch von thermoplastischen und duroplastischen Materialien angeordnet ist.

**15.** Material (I) nach einem der Ansprüche 1 bis 12, **dadurch gekennzeichnet, dass** die durchlässige Schicht (10) von einem thermoplastischen Material oder einem Gemisch von thermoplastischen und duroplastischen Materialien zwischen einer Bahn (1) von unidirektionalen Kohlefasern (2) und dem leitfähigen Bestandteil (11, 12, 13, 14) angeordnet ist.

**16.** Material (I) nach einem der Ansprüche 1 bis 12, 14 oder 15, **dadurch gekennzeichnet, dass** der leitfähige Bestandteil (11, 12, 13, 14) auf mindestens einem Teil der Fläche eines Gewebes oder vorzugsweise eines Vlieses (6) von thermoplastischen Fasern oder thermoplastischen und duroplastischen Fasern in Mischung abgeschieden ist.

**17.** Material (I) nach Anspruch 14 bis 16, **dadurch gekennzeichnet, dass** der leitfähige Bestandteil in Form von leitfähigen Partikeln oder Fasern, einer leitfähigen Metallabscheidung beziehungsweise leitfähigen Fäden (11, 12, 13, 14) vorliegt.

**18.** Material (I) nach Anspruch 17, **dadurch gekennzeichnet, dass** der leitfähige Bestandteil in Form einer Metallabscheidung oder von leitfähigen Fäden (11, 12, 13, 14) vorliegt, die mindestens 5 % der Fläche, vorzugsweise mindestens 10 bis 40 % dieser Fläche, und besonders 10 bis 60 % dieser Fläche bedecken, auf die er abgeschieden wird, und dass er vorzugsweise ein durchgängiges leitfähiges Netz erzeugt.

**19.** Material (I) nach einem der Ansprüche 1 bis 12, **dadurch gekennzeichnet, dass** der leitfähige Bestandteil in Form von Partikeln oder kurzen Fasern, in Mischung mit einem Pulver eines thermoplastischen Materials oder eines Gemischs von thermoplastischen und duroplastischen Materialien vorliegt.

**20.** Material (I) nach einem der vorhergehenden Ansprüche, **dadurch gekennzeichnet, dass** die durchlässige Schicht (3a, 3b, 10) einzig aus einem thermoplastischen Material besteht.

**21.** Material (I) nach Anspruch 20, **dadurch gekennzeichnet, dass** der leitfähige Bestandteil (5, 11, 12, 13, 14) mit einer durchlässigen Schicht (3a, 3b, 10) aus einem thermoplastischen Material verbunden oder darin integriert ist, das ausgewählt ist aus Polyamiden, Copolyamiden, Ether- oder Ester-Blockpolyamiden, Poluhthalamiden, Polyestern, Copolyestern, thermoplastischen Polyurethanen, Polyacetalen, C2-C8-Polyolefinen, Polyethersulfonen, Polysulfonen, Polyphenylensulfonen, Polyetheretherketonen, Polytherketonketonen, Poly(phenylensulfiden), Polyetherimiden, thermoplastischen Polyimiden, Polymeren mit Flüssigkristallen, Phenoxys, Blockcopolymeren, wie etwa Styrol-Butadien-Methylmethacrylat-Copolymeren, Methylmethacrylat-Acrylat-Copolymeren von Butyl-Methylmethacrylat und ihren Gemischen.

**22.** Material (I) nach einem der vorhergehenden Ansprüche, **dadurch gekennzeichnet, dass** der leitfähige Bestandteil (5, 11, 12, 13, 14) aus einem leitfähigen Material besteht oder lediglich seine Oberfläche aus einem leitfähigen Material besteht, wobei das leitfähige Material ausgewählt ist aus Kohlenstoff, Nickel, Gold, Platin, Palladium, Silber, Kupfer oder Cobalt.

**23.** Material (I) nach einem der vorhergehenden Ansprüche, **dadurch gekennzeichnet, dass** die Bahn(en) (1) von unidirektionalen Kohlefasern (2), die in dem Material vorliegen ein Flächengewicht von 100 bis 280 g/m$^2$ aufweisen.

**24.** Verfahren zur Herstellung eines Verbundbauteils, **dadurch gekennzeichnet, dass** es die folgenden Schritte umfasst:

a) Anordnen von mindestens einem Material (I) nach einem der Ansprüche 1 bis 23,
b) Verteilen eines duroplastischen Harzes, eines thermoplastischen Harzes oder eines Gemischs solcher Harze durch Infusion oder Injektion in dem oder den Material(ien).
c) Verfestigen des gewünschten Bauteils durch einen Schritt der Polymerisation/Vernetzung im Anschluss an einen Zyklus, der hinsichtlich der Temperatur definiert ist und unter Druck steht, gefolgt von einer Abkühlung.

**25.** Verfahren nach Anspruch 24, **dadurch gekennzeichnet, dass** es einen Schritt des Stapelns von mehreren Materialien (I) nach einem der Ansprüche 1 bis 23 umfasst.

**26.** Verfahren nach Anspruch 25, **dadurch gekennzeichnet, dass** es einen Schritt umfasst, der daraus besteht, den Stapel in Form einer Vorform fest zu verbinden.

**27.** Verfahren nach einem der Ansprüche 24 bis 26, **dadurch gekennzeichnet, dass** das duroplastische oder thermoplastische Harz oder ein Gemisch solcher Harze zu dem bzw. den Material(ien) durch eine Infusion mit verringertem Druck, insbesondere mit einem Druck, der kleiner als der Atmosphärendruck ist, insbesondere kleiner als 1 bar und vorzugsweise zwischen 0,1 und 1 bar, hinzugegeben wird.

**Claims**

**1.** Material (**I**) adapted to the production of composite parts by a method wherein an external thermoplastic or thermosetting matrix is circulated within said material, comprising at least one sheet (**1**) of unidirectional carbon fibres (**2**) associated, on at least one of its faces (**1a, 1b**), with at least one conductive component (**5, 11, 12, 13, 14**) associated or integrated with a permeable layer (**3a, 3b, 10**) **characterized in that** said permeable layer is in a thermoplastic material or in a mixture of thermosetting and thermoplastic materials, and **in that** it is in the form of a powder, a porous film, or, preferably, a non-woven (**3a, 3b, 10**).

2. Material (**I**) according to claim 1 above, **characterized in that** the material (**I**) contains from 0.5 to 10% thermoplastic material or a mixture of thermoplastic and thermosetting materials.

3. Material (**I**) according to one of the preceding claims **characterized in** it comprises only one sheet (**1**) of unidirectional carbon fibres (**2**), associated on only one of its faces (**1a, 1b**), with at least one conductive component (**5, 11, 12, 13, 14**) associated or integrated with a permeable layer (**3a, 3b, 10**) in a thermoplastic material or in a mixture of thermosetting and thermoplastic materials, said permeable layer being in the form of a powder, a porous film, or, preferably, a non-woven (**3a, 3b, 10**).

4. Material (**I**) according to claim 1 or 2, **characterized in that** it comprises several sheets (**1**) of unidirectional carbon fibres (**2**), with at least two sheets of unidirectional carbon fibres extending in different directions and wherein at least one conductive component (**5, 11, 12, 13, 14**) associated or integrated with a permeable layer (**3a, 3b, 10**) in a thermoplastic material or in a mixture of thermosetting and thermoplastic materials, said permeable layer being in the form of a powder, a porous film, or, preferably, a non-woven (**3a, 3b, 10**), is sandwiched between two successive sheets of unidirectional carbon fibres.

5. Material (**I**) according to one of the preceding claims, **characterized in that** the sheet or sheets (**1**) of unidirectional carbon fibres (**2**) and the conductive component(s) (**5, 11, 12, 13, 14**) associated or integrated in a permeable layer (**3a, 3b, 10**) in a thermoplastic material or in a mixture of thermosetting and thermoplastic materials, said permeable layer being in the form of a powder, a porous film, or, preferably, a non-woven (**3a, 3b, 10**), present in the material are attached by sewing, by knitting, by an adhesive or by thermal bonding.

6. Material (**I**) according to one of the preceding claims, **characterized in that** the conductive component (**5, 11, 12, 13, 14**) is in the form of particles (**5**), short fibres or yarns (**11, 12, 13, 14**).

7. Material (**I**) according to one of the preceding claims, **characterized in that** the conductive component/thermoplastic material or conductive component/thermoplastic and thermosetting materials weight ratio is 0.3 to 50%, preferably 0.5 to 5%.

8. Material (**I**) according to one of the preceding claims, **characterized in that** each permeable layer (**3a, 3b, 10**) + conductive element(s) (**5, 11, 12, 13, 14**) assembly has an openness factor in the range of around 30 to 99%, preferably in the range of around 40 to 70%.

9. Material (**I**) according to one of the preceding claims, **characterized in that** each permeable layer (**3a, 3b, 10**) + conductive element(s) (**5, 11, 12, 13, 14**) assembly has a basis weight in the range of 0.5 to 30 g/m$^2$, preferably in the range of 1 to 15 g/m$^2$.

10. Material (I) according to one of the preceding claims, **characterized in that** each permeable layer (**3a, 3b, 10**) + conductive element(s) (**5, 11, 12, 13, 14**) assembly has within the material a thickness of 5 to 30 microns, preferably from 5 to 20 microns.

11. Material (**I**) according to one of the preceding claims, **characterized in that** each permeable layer (**3a, 3b, 10**) + conductive element(s) (**5, 11, 12, 13, 14**) assembly has a conductivity in at least one direction, of at least 500 S/m, and preferably from 5000 to 20000 S/m.

12. Material (**I**) according to one of the preceding claims, **characterized in that** the sheet or sheets (**1**) of unidirectional carbon fibres (**2**) and the conductive component(s) (**5, 11, 12, 13, 14**) present within the material are bound by means of the thermoplastic or thermosetting material of the permeable layer through thermobonding.

13. Material (**I**) according to one of claims 1 to 12, **characterized in that** the conductive component (**5**) is in the form of particles or conductive fibres distributed in a matrix (**4**) of thermoplastic material or of a mixture of thermoplastic and thermosetting materials, forming a fabric, or preferably a non-woven (**6**).

14. Material (**I**) according to one of claims 1 to 12, **characterized in that** the conductive component (**13, 14**) is positioned between a sheet (**1**) of unidirectional carbon fibres (**2**) and the permeable layer (**10**) of thermoplastic material of a mixture of thermoplastic and thermosetting materials.

15. Material (**I**) according to one of claims 1 to 12, **characterized in that** the permeable layer (**10**) of thermoplastic material or of a mixture of thermoplastic and thermosetting materials is positioned between a sheet (**1**) of unidirectional carbon fibres (**2**) and the conductive component (**11, 12, 13, 14**).

16. Material (**I**) according to one of claims 1 to 12, 14 or 15, **characterized in that** the conductive component (**11, 12, 13, 14**) is positioned on at least one part of the surface of a fabric or, preferably a non-woven (**6**), of thermoplastic fibres or thermoplastic and thermosetting fibres in a mixture.

17. Material (**I**) according to claims 14 to 16, **characterized in that** the conductive component is in the form of particles or conductive fibres, a conductive metallic deposit or conductive yarns (**11, 12, 13, 14**).

18. Material (**I**) according to the claim 17, **characterized in that** the conductive component is in the form of a metallic deposit or conductive yarns (**11, 12, 13, 14**) covering at least 5% of the surface on which it is deposited, preferably at least 10 to 40% of this surface, and in particular from 10 to 60% of this surface, and creating, preferably, a continuous conductive network.

19. Material (**I**) according to one of claims 1 to 12, **characterized in that** the conductive component is in the form of particles or short fibres, in a mixture with a powder of a thermoplastic material or a mixture of thermoplastic and thermosetting materials.

20. Material (**I**) according to one of the preceding claims, **characterized in that** each permeable layer (**3a, 3b, 10**) is in a thermoplastic material only.

21. Material (**I**) according to claim 20, **characterized in that** the conductive component (**5, 11, 12, 13, 14**) is associated or integrated in a permeable layer (**3a, 3b, 10**) in a thermoplastic material selected from polyamides, copolyamides, polyamides - ester or ether block, polyphthalamides, polyesters, copolyesters, thermoplastic polyurethanes, polyacetals, C2-C8 polyolefins, polyethersulfones, polysulfones, polyphenylene sulfones, polyetheretherketones, polyetherketoneketones, poly (phenylene sulfides), polyetherimides, thermoplastic polyimides, liquid crystal polymers, phenoxies, block copolymers such as styrene-butadiene-methyl methacrylate copolymers, methyl methacrylate-butyl acrylate-methyl methacrylate copolymers, and mixtures thereof.

22. Material (**I**) according to one of the preceding claims, **characterized in that** the conductive component (**5, 11, 12, 13, 14**) is a conductive material or only its surface is a conductive material, said conductive material being selected from carbon, nickel, gold, platinum, palladium, silver, copper or cobalt.

23. Material (**I**) according to one of the preceding claims, **characterized in that** the sheet or sheets (**1**) of unidirectional carbon fibres (**2**) present in the material have a surface density of 100 to 280 g/m$^2$.

24. Fabrication process for a composite part, **characterized in that** it comprises the following steps:

    a) have at least one material (**I**) according to one of the claims 1 to 23,
    b) diffuse, by infusion or injection, a thermosetting resin, a thermoplastic resin or a mixture of such resins, within the material or materials,
    c) harden the desired part by a step of polymerization/crosslinking in a defined cycle at temperature and under pressure, followed by cooling.

25. Process according to claim 24, **characterized in that** it comprises a step of stacking several materials (**I**) according to one of the claims 1 to 23.

26. Process according to claim 25, **characterized in that** it comprises a step of consolidating the stack in the form of preform.

27. Process according to one of the claims 24 to 26, **characterized in that** the thermosetting or thermoplastic resin or a mixture of such resins is added to the material or materials by infusion under low pressure, in particular below atmospheric pressure, notably less than 1 bar and preferably between 0.1 and 1 bar.

FIG.1

FIG.2A

FIG.2B

FIG.3A

FIG.3B

FIG.3C

FIG.4A

FIG.4B

FIG.4C

FIG.4D

FIG.4E

## RÉFÉRENCES CITÉES DANS LA DESCRIPTION

**Documents brevets cités dans la description**

- EP 1125728 A
- US 6828016 B
- WO 0058083 A
- WO 2007015706 A
- WO 2006121961 A
- US 6503856 B
- FR 2924049

- WO 2010046609 A
- WO 2010061114 A
- US 20030008125 A
- WO 9921697 A
- WO 2011086266 A

**Littérature non-brevet citée dans la description**

- ASM Handbook. ASM International, 2001